# EUROPEAN PATENT SPECIFICATION

(11) **EP 2 989 891 B1**
(45) Date of publication and mention of the grant of the patent: **15.03.2017**
(21) Application number: 14183018.2
(22) Date of filing: 01.09.2014
(51) Int. Cl.: A01K 31/00, A01K 31/16

(54) **Laying nest for poultry**
Legenestanordnung für Geflügel
Pondoir pour volailles

(43) Date of publication of application: 02.03.2016
(73) Proprietor: Knol, Klaas, 7676 TA Westerhaar-Vriezenveensewijk (NL)
(72) Inventor: Knol, Klaas, 7676 TA Westerhaar-Vriezenveensewijk (NL)
(74) Representative: 't Jong, Bastiaan Jacob

(56) References cited:
- DE-U1-202013 102 427
- FR-A1- 2 766 330

## Description

The invention relates to a laying nest for poultry, comprising:
- a housing having a floor, side walls arranged around the floor and a roof wall arranged over the walls, wherein one of the side walls has an access opening;
- wherein the floor is tiltable from a horizontal position towards an upright position, the floor having a tilting axis arranged adjacent the side wall with the access opening, such that poultry is expelled through the access opening by tilting the floor.

Such a laying nest is know from for instance DE 20 2013 102 427 U1.

Such laying nests are typically used on an industrial scale for egg production, which either can be used for consumption or for poultry production. When eggs are used for production, the eggs are typically transported to another facility, where the eggs are hatched and the chicks are grown.

Because the eggs get in contact with the floor of the laying nest, the eggs will be soiled more or less. The soiling of the eggs could lead to infection of the eggs resulting in gas eggs or infected chicks needing antibiotics as soon as they are out of the egg.

In order to reduce soiling of the floor of a laying nest, the floor is tiltable, such that chickens are expelled from the laying nest at night, such that soiling of the nest is reduced.

It is furthermore known to provide the floor of the laying nest with a removable mat, which is periodically removed and cleaned using a washing machine, such as for example described by US 5551460 or US 6884302. The disadvantage of such systems is that all mats have to be removed from the laying nests, have to be transported to the washing machine and then have to be dried, before they can be returned to the laying nests. This is labor intensive and therefor only done with long time intervals.

Another system is for example known from GB 949788, in which a number of laying nests or cages are arranged on a conveyor system and can be transported to a service station, in which the laying nests are cleaned on by one. This involves a complex and therefor expensive system.

It is an object of the invention to reduce or even remove the above mentioned disadvantages.

This object is achieved according to the invention with a laying nest according to the preamble which is characterized by cleaning means arranged near the roof wall and adjacent to the side wall with the access opening for cleaning the floor in the upright position.

By arranging the cleaning means near the roof wall and adjacent to the side wall with the access opening, the floor can be cleaned when the floor is in the upright position. As this position is typically assumed in the evening and at night, there is sufficient time to clean the floor and to dry the floor, before it is tilted back to the horizontal position for use by the birds, e.g. chicken during the day.

Preferably, the cleaning means comprise a cleaning fluid supply and spray means for spraying the cleaning fluid onto the floor.

In a preferred embodiment of the laying nest according to the invention a fluid supply conduit is arranged extending along the length of the side wall and near the roof wall and wherein at least one spray nozzle is arranged on the fluid supply conduit.

Especially in industrial applications, a number of laying nests according to the invention will be arranged side by side. A fluid supply conduit can be provided extending along all of the laying nests. Spray nozzles arranged on the conduit will spray a cleaning fluid and desinfecting fluid onto the floor when in upright position, such that any contaminants or dirt is washed away by the fluid flowing along the upright floor downwardly.

Yet another preferred embodiment of the laying nest according to the invention further comprises collecting means arranged near the tilting axis for collecting soil resulting from the cleaning of the floor.

Preferably, the collecting means comprise a discharge gutter.

The cleaning fluid is preferably collected after cleaning the floor in for example a discharge gutter. The cleaning fluid can be filtered and reused or discharged to a suitable location, instead of having the cleaning fluid drained to the ground of the poultry living quarters.

A further preferred embodiment of the laying nest according to the invention further comprises disinfecting means arranged facing the floor in upright position.

Although daily cleaning the floor of the laying nest already contributes substantially to reducing infections of the eggs, a further treatment of the floor with a disinfectant even further reduces the chance on infections.

Preferably, the disinfecting means comprise a disinfecting fluid supply conduit provided with at least one spray nozzle for spraying the floor in upright position with the disinfecting fluid.

The disinfecting fluid is preferably sprayed on the floor, after the floor has been cleaned by the cleaning fluid.

In yet another embodiment of the laying nest according to the invention at least the side wall with the access opening is flexible. Preferably, the flexible side wall is a sheet of flexible material suspended from the roof wall.

When the floor is moved from the horizontal position towards the upright position, the bird will generally flee the laying nest via the access opening. However, to ensure that no birds are accidentally crushed between the moving floor and a side wall, the side wall is made flexible, such as a suspended sheet of flexible material. If a bird would stay on the laying nest, while the floor is moving towards the upright position, the flexible side wall will move away, such that the bird is still expelled from the laying nest without any injuries.

In still a further embodiment of the laying nest according to the invention the floor is inclined and wherein the lower edge of the floor, in the horizontal position of the floor, borders a discharge opening arranged in a side wall for discharging eggs.

If a bird lays an egg, the egg will be dropped onto the floor. Due to the inclination of the floor, the egg will roll towards the discharge opening and can then be transported away via, for example, a suitable conveyor belt.

These and other features of the invention, will be elucidated in conjunction with the accompanying drawings.
Figure 1 shows a perspective view with cut away portions of a laying nest according to the invention.
Figure 2 shows a cross-sectional view of the embodiment of figure 1 with the floor in horizontal position.
Figure 3 shows a cross-sectional view of the embodiment of figure 1 with the floor in upright position.

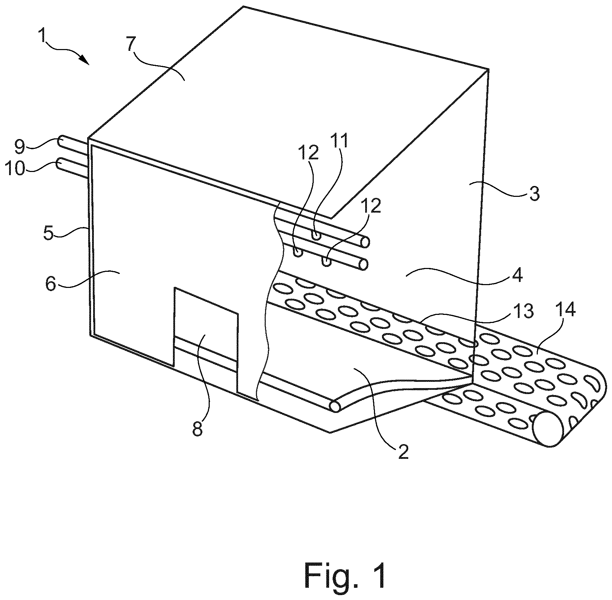

Figure 1 shows a perspective view with cut away portions of a laying nest 1 according to the invention. The laying nest 1 has a housing with a floor 2, side walls 3, 4, 5, 6 and a roof wall 7. Preferably, the roof wall 7 is hinged for easy access to the laying nest 1.

The side wall 6 has an access opening 8, through which birds can access the laying nest 1.

Two conduits 9, 10 are arranged near the roof wall 7 and adjacent to the side wall 6. Each conduit 9, 10 is provided with spray nozzles 11, 12 respectively.

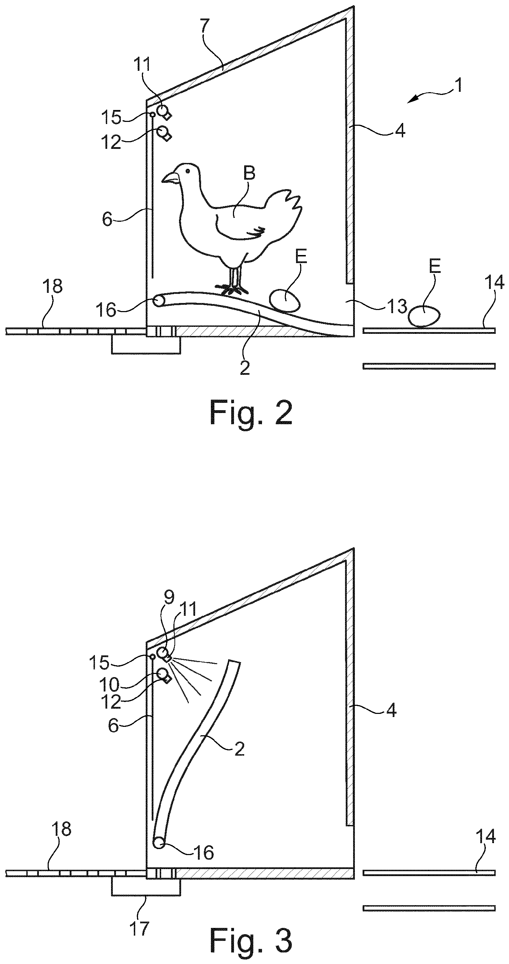

The back side wall 4 has near the floor 2 a discharge opening 13 and a conveyor belt 14 arranged adjoiningly. When a bird, such as a chicken, B lays an egg on the floor 2, the egg E will roll, due to the inclination of the floor 2, towards the discharge opening 13 and onto the conveyor belt 14, which will transport the egg E away. (see also figure 2).

The front side wall 6 with the access opening 8 is made of a flexible sheet, suspended at a suspension rail 15 from the roof 7. When the floor 2 is tilted along the tilting axis 16 towards an upward position (as shown in figure 3), any birds B present within the laying nest 1 will be expelled via either the access opening 8 or by pushing the flexible sheet 6 away.

In the upright position of the floor 2, the floor 2 can be cleaned by spraying a cleaning fluid out of the conduit 9 onto the floor 2 via nozzles 11. The cleaning fluid will flow along the floor 2, taking along any dirt, towards the bottom, where the cleaning fluid and dirt is collected in a gutter 17 arranged underneath the laying nest 1 and a perforated floor 18 in front of the laying nest 1.

After the floor 2 has been cleaned and dried, the second conduit 10 can spray with the spray nozzles 12 a disinfectant on the floor 2, after which the floor 2 can be tilted back to the horizontal position, as shown in figure 2.

## Claims

1. Laying nest (1) for poultry (B), comprising:
- a housing (1) having a floor (2), side walls (3, 4, 5, 6) arranged around the floor (2) and a roof wall (7) arranged over the walls (3, 4, 5, 6), wherein one of the side walls (3, 4, 5, 6) has an access opening (8);
- wherein the floor (2) is tiltable from a horizontal position towards an upright position, the floor (2) having a tilting axis (16) arranged adjacent the side wall (6) with the access opening (8), such that poultry (B) is expelled through the access opening (8) by tilting the floor (2),
**characterized by**
cleaning means (9, 11) arranged near the roof wall (7) and adjacent to the side wall (6) with the access opening (8) for cleaning the floor (2) in the upright position.

2. Laying nest (1) according to claim 1, wherein the cleaning means (9, 11) comprise a cleaning fluid supply (9) and spray means (11) for spraying the cleaning fluid onto the floor (2).

3. Laying nest (1) according to claim 2, wherein a fluid supply conduit (9) is arranged extending along the length of the side wall (6) and near the roof wall (7) and wherein at least one spray nozzle (11) is arranged on the fluid supply conduit (9).

4. Laying nest (1) according to any of the preceding claims, further comprising collecting means (17) arranged near the tilting axis (16) for collecting soil resulting from the cleaning of the floor (2).

5. Laying nest (1) according to claim 4, wherein the collecting means (17) comprise a discharge gutter (17).

6. Laying nest (1) according to any of the preceding claims, further comprising disinfecting means (10, 12) arranged facing the floor (2) in upright position.

7. Laying nest (1) according to claim 6, wherein the disinfecting means (10, 12) comprise a disinfecting fluid supply conduit (10) provided with at least one spray nozzle (12) for spraying the floor (2) in upright position with the disinfecting fluid.

8. Laying nest (1) according to any of the preceding claims, wherein at least the side wall (6) with the access opening (8) is flexible.

9. Laying nest (1) according to claim 8, wherein the flexible side wall (6) is a sheet of flexible material suspended from the roof wall (7).

10. Laying nest (1) according to any of the preceding claims, wherein the floor (2) is inclined and wherein the lower edge of the floor (2), in the horizontal position of the floor (2), borders a discharge opening (13) arranged in a side wall (4) for discharging eggs (E).

## Patentansprüche

1. Legenest (1) für Geflügel (B), aufweisend:
- ein Gehäuse (1) mit einem Boden (2), Seitenwänden (3, 4, 5, 6), die um den Boden (2) herum angeordnet sind, und einer Dachwand (7), die über den Wänden (3, 4, 5, 6) angeordnet ist, wobei eine von den Seitenwänden (3, 4, 5, 6) eine Zugangsöffnung (8) hat;
- wobei der Boden (2) von einer horizontalen Position in Richtung einer aufrechten Position gekippt werden kann, wobei der Boden (2) eine Kippachse (16) hat, die benachbart zu der Seitenwand (6) mit der Zugangsöffnung (8) angeordnet ist, so dass das Geflügel (B) durch Kippen des Bodens (2) durch die Zugangsöffnung (8) ausgestoßen wird,
**gekennzeichnet durch**
Reinigungsmittel (9, 11), die in der Nähe der Dachwand (7) und benachbart zu der Seitenwand (6) mit der Zugangsöffnung (8) angeordnet sind, um den Boden (2) in der aufrechten Position zu reinigen.

2. Legenest (1) nach Anspruch 1, wobei die Reinigungsmittel (9, 11) eine Reinigungsfluidversorgung (9) und Sprühmittel (11) zum Sprühen des Reinigungsfluides auf den Boden (2) umfassen.

3. Legenest (1) nach Anspruch 2, wobei eine Fluidversorgungsleitung (9) angeordnet ist, die sich entlang der Länge von der Seitenwand (6) und in der Nähe von der Dachwand (7) erstreckt, und wobei wenigstens eine Sprühdüse (11) an der Fluidversorgungsleitung (9) angeordnet ist.

4. Legenest (1) nach einem der vorhergehenden Ansprüche, weiter Sammelmittel (17) umfassend, die in der Nähe der Kippachse (16) angeordnet sind, um aus der Reinigung von dem Boden (2) resultierenden Schmutz zu sammeln.

5. Legenest (1) nach Anspruch 4, wobei die Sammelmittel (17) eine Entladungsrinne (17) umfassen.

6. Legenest (1) nach einem der vorhergehenden Ansprüche, weiter Desinfektionsmittel (10, 12) umfassend, die dem Boden (2) in aufrechter Position zugewandt angeordnet sind.

7. Legenest (1) nach Anspruch 6, wobei die Desinfektionsmittel (10, 12) eine Desinfektionsfluidversorgungsleitung (10) umfassen, die mit wenigstens einer Sprühdüse (12) zum Besprühen des Bodens (2) in aufrechter Position mit dem Desinfektionsfluid bereitgestellt ist.

8. Legenest (1) nach einem der vorhergehenden Ansprüche, wobei wenigstens die Seitenwand (6) mit der Zugangsöffnung (8) flexibel ist.

9. Legenest (1) nach Anspruch 8, wobei die flexible Seitenwand (6) eine Platte aus flexiblem Material ist, die von der Dachwand (7) herabhängt.

10. Legenest (1) nach einem der vorhergehenden Ansprüche, wobei der Boden (2) geneigt ist und wobei der untere Rand von dem Boden (2), in der horizontalen Position von dem Boden (2), eine Entladeöffnung (13) begrenzt, die in einer Seitenwand (4) angeordnet ist, um Eier (E) zu entladen.

## Revendications

1. Pondoir (1) pour volaille (B), comprenant :
- un logement (1) ayant un plancher (2), des parois latérales (3, 4, 5, 6) agencées autour du plancher (2) et une paroi formant toit (7) agencée sur les parois (3, 4, 5, 6), dans lesquelles une des parois latérales (3, 4, 5, 6) a une ouverture d'accès (8) ;
- dans lequel le plancher (2) peut basculer d'une position horizontale à une position verticale, le plancher (2) ayant un axe d'inclinaison (16) agencé adjacent à la paroi latérale (6) avec l'ouverture d'accès (8), de sorte que la volaille (B) est expulsée à travers l'ouverture d'accès (8) en inclinant le plancher (2),
**caractérisé par**
un moyen de nettoyage (9, 11) agencé près de la paroi formant toit (7) et adjacent à la paroi latérale (6) avec l'ouverture d'accès (8) pour nettoyer le plancher (2) dans la position verticale.

2. Pondoir (1) selon la revendication 1, dans lequel le moyen de nettoyage (9, 11) comprend une alimentation en fluide de nettoyage (9) et un moyen de pulvérisation (11) pour pulvériser le fluide de nettoyage sur le plancher (2).

3. Pondoir (1) selon la revendication 2, dans lequel un conduit d'alimentation en fluide (9) est agencé s'étendant le long de la longueur de la paroi latérale (6) et près de la paroi formant toit (7) et dans lequel au moins une buse de pulvérisation (11) est agencée sur le conduit d'alimentation en fluide (9).

4. Pondoir (1) selon l'une quelconque des revendications précédentes, comprenant en outre un moyen de collecte (17) agencé près de l'axe d'inclinaison (16) pour collecter les souillures résultant du nettoyage du plancher (2).

5. Pondoir (1) selon la revendication 4, dans lequel le moyen de collecte (17) comprend une gouttière de décharge (17).

6. Pondoir (1) selon l'une quelconque des revendications précédentes, comprenant en outre un moyen de désinfection (10, 12) agencé face au plancher (2) dans une position verticale.

7. Pondoir (1) selon la revendication 6, dans lequel le moyen de désinfection (10, 12) comprend un conduit d'alimentation en fluide de désinfection (10) muni d'au moins une buse de pulvérisation (12) pour pulvériser le plancher (2) en position verticale avec le fluide de désinfection.

8. Pondoir (1) selon l'une quelconque des revendications précédentes, dans
lequel l'au moins une paroi latérale (6) avec l'ouverture d'accès (8) est souple.

9. Pondoir (1) selon la revendication 8, dans lequel la paroi latérale souple (6) est une feuille de matière souple suspendue à la paroi formant toit (7).

10. Pondoir (1) selon l'une quelconque des revendications précédentes, dans
lequel le plancher (2) est incliné et dans lequel le bord inférieur du plancher (2), dans la position horizontale du plancher (2), borde une ouverture de décharge (13) agencée dans une paroi latérale (4) pour décharger les oeufs (E).
